# EUROPÄISCHE PATENTSCHRIFT

(11) **EP 1 094 067 B1**
(45) Veröffentlichungstag und Bekanntmachung des Hinweises auf die Patenterteilung: **22.10.2003**
(21) Anmeldenummer: 00119868.8
(22) Anmeldetag: 13.09.2000
(51) Int. Cl.: C07F 7/18, C08K 5/548

(54) **Organosiliciumverbindung, Verfahren zu ihrer Herstellung und deren Verwendung**
Organosilicon compounds, their preparation and use
Composées organosiliciques, leur preparation et leur utilisation

(30) Priorität: 21.10.1999 DE 19950608
(43) Veröffentlichungstag der Anmeldung: 25.04.2001
(73) Patentinhaber: Degussa AG, 40474 Düsseldorf (DE)
(72) Erfinder: Luginsland, Hans-Detlef, Dr., 50968 Köln (DE); Batz-Sohn, Christoph, Dr., 63452 Hanau (DE); Münzenberg, Jörg, Dr., 63457 Hanau (DE); Zezulka, Gerd Rainhard, 63456 Hanau (DE)

(56) Entgegenhaltungen:
- EP-A- 0 513 699
- BECKER, BARBARA ET AL: "Zinc silanethiolates: synthesis and properties. Crystal structures of bis(tri-tert-butoxysilanethiolato)(acetoni trile)zinc(II) and bis(tri-tert-butoxysilanethiolato)(bipyrid ine)zinc(II)" JOURNAL OF ORGANOMETALLIC CHEMISTRY (1996), 521(1-2), 39-49 , XP002221607

## Beschreibung

Die vorliegende Erfindung betrifft eine Organosiliziumverbindung, ein Verfahren zu ihrer Herstellung und deren Verwendung.

Es ist bekannt, daß schwefelhaltige Organosiliziumverbindungen, wie 3-Mercaptopropyltrimethoxysilan, 3-Mercaptopropyltriethoxysilan, 3-Thiocyanatopropyltriethoxysilan oder Bis-(3-[Triethoxysilyl]-propyl)tetrasulfan als Silanhaftvermittler oder Verstärkungsadditiv in oxidisch gefüllten Kautschukmischungen eingesetzt werden. Die Kautschukmischungen werden unter anderem für technische Gummiartikel und für Teile des Autoreifens, insbesondere für Laufflächen, verwendet (DE 2 141 159, DE 2 212 239, US 3 978 103, US 4 048 206).

Es ist weiterhin bekannt, daß die Alkoxysilylfunktion, meist eine Trimethoxysilyl- oder Triethoxysilylgruppe, während der Mischungsherstellung mit den Silanolgruppen des Füllstoffs, meist Kieselsäure, reagiert und so das Silan auf der Füllstoffoberfläche fixiert wird. Die Ausbildung der Füllstoff-Kautschukbindung erfolgt dann während des Vulkanisationsprozesses über die Schwefelfunktionalität des fixierten Silans. Demnach ist das resultierende Eigenschaftsbild solcher Vulkanisate bei konstanter Silanmenge entscheidend davon abhängig, wie hoch die Kopplungsausbeute des Silans ist und welche Netzwerkstruktur ausgebildet wird. Desweiteren ist bekannt, daß Silane mit Polysulfanfunktionen, wie zum Beispiel das Bis-(3-[Triethoxysilyl]-propyl)tetrasulfan, bei entsprechend hohen Temperaturen schon während des Mischprozesses zu einer unvorteilhaften Vorvernetzung neigen. Deshalb ist es wichtig, bei der Verwendung dieser Silane eine maximale Batchtemperatur von ca. 155 °C nicht zu überschreiten.

Aufgabe der vorliegenden Erfindung ist es Organosiliziumverbindungen zur Verfügung zu stellen, die als Haftvermittler oder Verstärkungsadditiv in Kauschukmischungen höhere Kopplungsausbeuten, verbesserte Gummieigenschaften und höhere Prozeßsicherheit liefern, als die bisher bekannten Silane.

Gegenstand der Erfindung ist eine Organosiliziumverbindung der allgemeinen Formel I

R¹R²R³Si-R⁴-S-Zn-S-R⁴-SiR¹R²R³ (I)

wobei
R¹, R², R³ unabhängig voneinander, H, Halogen,
geradkettige oder verzweigte Alkylgruppe,
geradkettige oder verzweigte Alkoxygruppe,
R⁴ ein geradkettiger oder verzweigter Alkylidenrest bedeuten.

Geradkettige Alkylgruppen können Methyl-, Ethyl-, n-Propyl-, n-Butyl-, n-Pentyl- oder n-Hexyl-Gruppen sein. Verzweigte Alkylgruppen können Iso-Propyl-, Iso-Butyl- oder tert-Butyl-Gruppen sein. Halogen kann Fluor, Chlor, Brom oder Jod sein. Alkoxygruppen können Methoxy-, Ethoxy-, Propoxy-, Butoxy-, Isopropoxy-, Isobutoxy- oder Pentoxy-Gruppen sein.

Bevorzugt kann in der Organosiliziumverbindung gemäß der Formel I, R¹, R², R³ = Ethoxy und R⁴ = CH₂CH₂CH₂ oder Isobutyliden bedeuten.

Ein weiterer Gegenstand der Erfindung ist ein Verfahren zur Herstellung der Organosiliziumverbindung der allgemeinen Formel I, dadurch gekennzeichnet, daß man eine Mercaptanverbindung der allgemeinen Formel II

R¹R²R³Si-R⁴-S-H (II)

wobei
R¹, R², R³ unabhängig voneinander, H, Halogen,
geradkettige oder verzweigte Alkylgruppe,
geradkettige oder verzweigte Alkoxygruppe,
R⁴ ein geradkettiger oder verzweigter Alkylidenrest bedeuten,
mit Zinkalkoholat umsetzt. Die Umsetzung kann man in alkoholischer Lösung durchführen. Die Umsetzung kann man in einem Temperaturbereich von 20° bis 200°C, vorzugsweise 50° bis 80°C, durchführen.

Als Zinkalkoholat kann man Zinkethanolat einsetzen. Zur. Herstellung der alkoholischen Lösung kann man Ethanol verwenden. Das Zinkethanolat kann man durch Umsetzung von Zinkchlorid mit Natriumethanolat in alkoholischer Lösung herstellen. Das Zinkalkoholat kann man mit der zweifachen molaren Menge der Mercaptanverbindung II in alkoholischer Lösung zur Reaktion bringen.

Als Mercaptanverbindung kann man 3-Mercaptopropyltriethoxysilan verwenden. In einer Ausführungsform kann man eine Verbindung der Formel II mit R¹, R², R³ = Ethoxy, R⁴ = CH₂CH₂CH₂, mit Zinkethanolat in ethanolischer Lösung umsetzen.

Die erfindungsgemäße Organosiliziumverbindung ist hochreaktiv und kann in Kautschukmischungen verwendet werden.

Kautschukmischungen, die die erfindungsgemäßen Organosiliziumverbindung als Haftvermittler oder Verstärkungsadditiv enthalten und die nach einem Vulkanisationsschritt resultierende Formkörper, insbesondere Luftreifen oder Reifenlaufflächen, besitzen einen niedrigen Rollwiderstand bei gleichzeitig guter Nässehaftung und hohem Abriebwiderstand.

Ein weiterer Gegenstand der vorliegenden Erfindung sind Kautschukmischungen, dadurch gekennzeichnet, daß sie Kautschuk, Füllstoff, vorzugsweise gefällte Kieselsäure, mindestens eine Organosiliziumverbindung der Formel (I) und gegebenenfalls weitere Kautschukhilfsmittel enthalten.

Die Organosiliziumverbindung der Formel I kann in Mengen von 0,1 bis 15 Gew.-%, bevorzugt 5-10 Gew.-%, bezogen auf die Menge des eingesetzten Füllstoffs, eingesetzt werden.

Als Kautschuk kann Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Die Kautschuke können sowohl alleine als auch in Kombination verwendet werden. Für die Herstellung von Kfz-Reifen können insbesondere anionisch polymerisierte L-SBR-Kautschuke mit einer Glastemperatur oberhalb von -50 °C sowie deren Mischungen mit hoch cis-haltigen Dienkautschuken eingesetzt werden.

Als Füllstoffe können eingesetzt werden:
- Ruße, die nach dem Flammruß-, Furnace- oder Gasruß-Verfahren hergestellt sind und eine BET-Oberflächen von 20 bis 200 m²/g besitzen,
- hochdisperse Kieselsäuren, hergestellt zum Beispiel durch Fällungen aus Silikatlösungen oder durch Flammenhydrolyse von Siliziumhalogeniden, mit spezifischen Oberflächen von 5 bis 1000 m²/g, vorzugsweise 20 bis 400 m²/g (BET-Oberfläche) und mit Primärteilchengrößen von 10 bis 400 nm, gegebenenfalls auch als Mischoxide mit anderen Metalloxiden, wie Al-, Mg-, Ca-, Ba-, Znund Titanoxiden,
- synthetische Silikate, wie Aluminiumsilikat, Erdalkalisilikate wie beispielsweise Magnesiumsilikat oder Calciumsilikat, mit BET-Oberflächen von 20 bis 400 m²/g und Primärteilchendurchmessern von 10 bis 400 nm,
- natürliche Silikate, wie Kaolin und andere natürlich vorkommende Kieselsäuren,
- Glasfasern und Glasfaserprodukte (Matten, Stränge) oder Mikroglaskugeln.

Die Kautschukmischungen können Synthesekautschuk und Kieselsäure als Füllstoff enthalten. Bevorzugt können hochdisperse Kieselsäuren, hergestellt durch Fällung aus Silikatlösungen, mit BET-Oberflächen von 20 bis 400 m²/g in Mengen von 10 bis 150 Gew.-Teilen, bezogen auf 100 Gew.-Teile Kautschuk, eingesetzt werden.

Die genannten Füllstoffe können alleine oder als Gemisch eingesetzt werden.

In einer besonders bevorzugten Ausführung der Kautschukmischung können 10 bis 150 Gew.-Teile helle Füllstoffe, gegebenenfalls zusammen mit 0 bis 100 Gew.-Teilen Ruß, bezogen auf 100 Gew.-Teile Kautschuk, sowie 0,1 bis 15 Gew.-Teile, bevorzugt 5 bis 10 Gew.-Teile, einer Verbindung der Formel (I), bezogen auf 100 Gew.-Teile des eingesetzten Füllstoffs, zur Herstellung der Mischungen eingesetzt werden.

Die erfindungsgemäßen Organosiliziumverbindungen können sowohl in reiner Form als auch aufgezogen auf einen inerten organischen oder anorganischen Träger, verwendet werden. Bevorzugte Trägermaterialien können Kieselsäure, natürliche oder synthetische Silikate, Aluminiumoxid oder Ruße sein. Die erfindungsgemäßen Organosiliziumverbindungen können alleine oder in Kombination mit anderen Organosiliziumverbindungen, insbesondere monofunktionellen Alkylalkoxysilanen, verwendet werden.

Als Kautschukhilfsprodukte können Reaktionsbeschleuniger, Reaktionsverzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol, die der Kautschukindustrie bekannt sind, verwendet werden.

Die Kautschukhilfsmittel können in üblichen Mengen, die sich unter anderem nach dem Verwendungszweck richten, eingesetzt werden. Übliche Mengen können 0,1 bis 50 Gew.-%, bezogen auf Kautschuk, sein. Die Organosiliziumverbindungen können durch die Zugabe von Schwefel und Beschleunigern vor der eigentlichen Vernetzungsreaktion aktiviert werden. Diese Aktivierung kann während des Vulkanisationsschrittes erfolgen. Geeignete Vulkanisationsbeschleuniger können Mercaptobenzthiazole, Sulfenamide, Guanidine, Thiurame, Dithiocarbamate, Thioharnstoffe und Thiocarbonate sein. Die Vulkanisationsbeschleuniger und Schwefel oder Peroxide können in Mengen von 0,1 bis 10 Gew.-%, bevorzugt 0.1 bis 5 Gew.-%, bezogen auf Kautschuk, eingesetzt werden.

Bei der Verwendung der erfindungsgemäßen Organosiliziumverbindungen in Kautschukmischungen zeigen sich gegenüber den Mischungen nach dem Stand der Technik Vorteile in den statischen und dynamischen Vulkanisatdaten. Dies zeigt sich insbesondere in einer höheren Zugfestigkeit, einem höheren Spannungswert 300 % und einem verbesserten Verstärkungsverhältnis Spannungswert 300 % / 100 %. Zudem zeigen die Mischungen mit den erfindungsgemäßen Organosiliziumverbindungen einen abgesenkten Wärmeaufbau (Goodrich-Flexometertest), was ein positives Hystereseverhalten aufzeigt und einen vorteilhaft niedrigen Verlustfaktor tan δ (60°C), der mit dem Rollwiderstandswert korreliert.

Ein weiterer Gegenstand der Erfindung ist ein Verfahren zur Herstellung der Kautschukmischungen, dadurch gekennzeichnet, daß man Kautschuk, Füllstoff, mindestens eine Organosiliziumverbindung der Formel I und gegebenenfalls weitere Kautschukhilfsmittel mischt.

Die erfindungsgemäßen Organosiliziumverbindungen sowie die Füllstoffe kann man bevorzugt bei Massetemperaturen von 100 bis 200 °C einmischen, man kann jedoch auch später bei tieferen Temperaturen (40 bis 100 °C), zum Beispiel zusammen mit weiteren Kautschukhilfsmitteln, einmischen. Das Mischen der Bestandteile der Kautschukmischung kann man in üblichen Mischaggregaten, wie Walzen, Innenmischern und Mischextrudern, durchführen.

Die Vulkanisation der erfindungsgemäßen Kautschukmischungen kann bei Temperaturen von 100 bis 200 °C, bevorzugt 130 bis 180 °C, und gegebenenfalls unter Druck von 10 bis 200 bar erfolgen. Die erfindungsgemäßen Kautschukvulkanisate können Formkörper, beispielsweise Luftreifen, Reifenlaufflächen, Kabelmäntel, Schläuche, Treibriemen, Förderbänder, Walzenbeläge, Reifen, Schuhsohlen, Dichtungsringe und Dämpfungselemente, sein.

Die Verwendung der erfindungsgemäßen Organosiliziumverbindungen als Haftvermittler oder Verstärkungsadditiv in Kauschukmischungen, führt zu viel höheren Kopplungsausbeuten und einem entsprechend verbessertem Gummieigenschaftsbild, als die bekannten Silane. Die erfindungsgemäßen Organosiliziumverbindungen zeigen nicht die bekannte Tendenz zur Vorvernetzung der unbeschleunigten Mischung bei hohen Mischtemperaturen. Somit sind deutlich höhere Verarbeitungstemperaturen tolerierbar bei einer höheren Prozeßsicherheit. Eine Aktivierung der schwefelfunktionellen Gruppe kann erst während der Vulkanisation unter Schwefel- und Beschleunigerzusatz erfolgen.

### Beispiele

### Beispiel 1: Herstellung der Zinkorganosiliziumverbindung

Beispiel 1 beschreibt die Herstellung einer der erfindungsgemäßen Organosiliziumverbindung.

Zur Herstellung einer Natriumethanolatlösung wird in einem 1 l Kolben unter Argonatmosphäre 750 ml Ethanol vorgelegt und dann portionsweise 46 g (2 mol) Natriumstücke zugegeben.

Zur Herstellung der Zinkorganosiliziumverbindung wird in einem 4 L Vierhalskolben mit Rührer, Kühler, Thermometer und Tropftrichter 750 ml Ethanol und 136,3 g (1 mol) Zinkchlorid vorgelegt. Die frisch hergestellte Natriumethanolatlösung wird dann in den Tropftrichter überführt und unter Rühren und Erhitzen bei 78°C in einem Zeitraum von 1 Stunde zugetropft. Der Ansatz wird zur Nachreaktion über Nacht stehengelassen und dann 446,8 g (2 mol) 3-Mercaptopropyltriethoxysilan über einen Zeitraum von 2 Stunden unter Erhitzen zugetropft. Es wird bei 78°C für weitere 4 Stunden nachgerührt und anschließend auf Raumtemperatur abgekühlt, die Suspension filtriert und 3 mal mit 100 ml Ethanol nachgewaschen. Das Filtrat wird zur Trockene eingeengt und der verbleibende Feststoff im Vakuum bei 120°C getrocknet und anschließend vermahlen.

Es werden 514.8 g festes Produkt erhalten, das entspricht 95,5 % der Theorie.
- Elementaranalyse:: C: 38.66 % n.T. 40.02 %
H: 7.64 % n.T. 7.84 %
S: 11.92 % n.T. 11.87 %
Cl: <0.1 %

### Beispiele 2-5: Herstellung der Kautschukmischungen und Vulkanisate

In den Beispielen 2 bis 5 wird die Herstellung der Kautschukmischungen und der Vulkanisate beschrieben. Anhand von Beispiel 5, das die erfindungsgemäße Organosiliziumverbindung aus Beispiel 1 als Haftvermittler enthält, werden die gegenüber dem Stand der Technik (Vergleichsbeispiele 2 bis 4) überlegenen Eigenschaften der erfindungsgemäßen Verbindungen deutlich.

### Allgemeine Durchführungsvorschrift

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks.

**Tabelle 1**

| Substanz | Menge [phr] |
|---|---|
| | |

| 1. Stufe | |
|---|---|
| Buna VSL 5025-1 | 96.0 |
| Buna CB 24 | 30.0 |
| Ultrasil 7000 GR | 80.0 |
| ZnO | 3.0 |
| Stearinsäure | 2.0 |
| Naftolen ZD | 10.0 |
| Vulkanox 4020 | 1.5 |
| Protector G35P | 1.0 |
| Silane | wie im Beispiel angegeben |

| 2. Stufe | |
|---|---|
| Batch Stufe 1 | |
| | |

| 3. Stufe | |
|---|---|
| Batch Stufe 2 | |
| Vulkacit D | 2.0 |
| Vulkacit CZ | 1.5 |
| Schwefel | wie im Beispiel angegeben |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Von dem Butadien sind 73 % 1,2, 10 % cis-1,4 und 17 % trans-1,4 verknüpft. Das Copolymer enthält 37,5 phr Öl und weist eine Mooney-Viskosität (ML 1+4/100°C) von etwa 50 auf.

Bei dem Polymer Buna CB 24 handelt es sich um ein cis-1,4-Polybutadien (Neodymtyp) der Bayer AG, mit cis-1,4-Gehalt von 97 %, einem trans-1,4-Gehalt von 2 %, einem 1,2-Gehalt von 1 % und einer Mooney-Viskosität zwischen 44 und 50 ME.

Ultrasil 7000 GR ist eine leicht dispergierbare Kieselsäure der Degussa-Hüls AG und besitzt eine BET-Oberfläche von 175 m²/g. Das Silan mit dem Handelsnamen Si 69 ist Bis-(3-[Triethoxysilyl]-propyl)tetrasulfan, das Silan Si 264 ist 3-Thiocyanatopropyltriethoxysilan und Dynasilan 3201 ist 3-Mercaptopropyltriethoxysilan. Die oben genannten Silane werden von der Degussa-Hüls AG vertrieben.

Als aromatisches Öl wird Naftolen ZD der Chemetall verwendet, bei Vulkanox 4020 handelt es sich um PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Die Kautschukmischung wird dreistufig in einem Innenmischer gemäß Tabelle 2 hergestellt.

**Tabelle 2:**

| **Stufe 1** | |
|---|---|
| **Einstellungen** | |
| Mischaggregat | Werner & Pfleiderer |
| Friktion | 1:1,11 |
| Drehzahl | 70 min⁻¹ |
| Stempeldruck | 5,5 bar |
| Leervolumen | 1,6 L |
| Füllgrad | 0,55 |
| Durchflußtemp. | 70 °C |

| **Mischvorgang** | |
|---|---|
| 0 bis 1 min | Buna VSL 5025-1 + Buna CB 24 |
| 1 bis 3 min | ½ Ultrasil 7000 GR, ZnO, Stearinsäure, Naftolen ZD, Silan |
| 3 bis 4 min | ½ Ultrasil 7000 GR, Vulkanox 4020, Protector G35P |
| 4 min | säubern |
| 4 bis 5 min | mischen |
| 5 min | säubern |
| 5 bis 6 min | mischen und ausfahren |
| | |
| Batch-Temp. | 140-150°C |
| Lagerung | 24 h bei Raumtemperatur |

| **Stufe 2** | |
|---|---|
| **Einstellungen** | |
| Mischaggregat | wie in Stufe 1 bis auf: |
| Drehzahl | 80 min⁻¹ |
| Füllgrad | 0,53 |
| Durchflußtemp. | 80 °C |

| **Mischvorgang** | |
|---|---|
| 0 bis 2 min | Batch Stufe 1 aufbrechen |
| 2 bis 5 min | Batchtemperatur 150°C durch Drehzahlvariation halten |
| 5 min | ausfahren |
| | |
| Batch-Temp. | 150-155°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min⁻¹ |
| Füllgrad | 0,51 |
| Durchflußtemp. | 50 °C |

| **Mischvorgang** | |
|---|---|
| 0 bis 2 min | Batch Stufe 2 + Vulkacit CZ + Vulkazit D + Schwefel |
| 2 min | ausfahren und auf Labormischwalzwerk Fell bilden |
| | (Durchmesser 200 mm, Länge 450 mm, Durchflußtemperatur 50°C) |
| | |
| | Homogenisieren: |
| | 3* links, 3* rechts einschneiden und umklappen sowie 8* bei engem Walzenspalt (1 mm) und 3* bei weitem Walzenspalt (3,5 mm) stürzen und anschließend ein Fell ausziehen |
| | |
| Batch-Temp. | 90-100°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C (3. Stufe) | DIN 53523/3, ISO 667 |
| Vulkameterprüfung, 165°C | DIN 53529/3, ISO 6502 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 23°C | ASTM D 5308 |
| Viskoelastische Eigenschaften, | DIN 53 513, |
| 0 und 60°C, 16 Hz, 50 N Vorkraft und 25 N Amplitudenkraft | ISO 2856 |
| Komplexer Modul E*, | |
| Verlustfaktor tan δ | |
| Goodrich Flexometertest, | DIN 53 533 |
| 0.25 inch, 25min, 23°C Start | ASTM D 623-A |
| Kontakttemperatur | |
| Centertemperatur | |
| Permanent Set | |
| DIN-Abrieb, 10 N Kraft | DIN 53 516 |
| Dispersion | ISO/DIN 11345 |

### Beispiele 2 bis 5:

Die Durchführung der Beispiele 2 bis 5 erfolgt gemäß der "Allgemeinen Durchführungsvorschrift", wobei die Beispiele 2 bis 4 als Vergleichsbeispiele den Stand der Technik beschreiben.

Es werden in Beispiel 2 6,40 phr Si 69 mit 1,5 phr Schwefel, in Beispiel 3 6,32 phr Si 264 mit 2,2 phr Schwefel und in Beispiel 4 5,75 phr Dynasilan 3201 mit 2,2 phr Schwefel verwendet. In Beispiel 5 wird 6,47 phr der erfindungsgemäßen Organosiliziumverbindung aus Beispiel 1 und 2,2 phr Schwefel verwendet. Dies entspricht equimolaren Dosierungen mit einem der Silane entsprechend angepaßtem Schwefelgehalt.

In der Tabelle 4 sind die gummitechnischen Daten für Rohmischung und Vulkanisat angegeben.

**Tabelle 4**

| **Rohmischungsergebnisse** | | | | | |
|---|---|---|---|---|---|
| **Merkmal** | **Einheit** | **Bsp.2** | **Bsp.3** | **Bsp.4** | **Bsp.5** |
| ML(1+4) bei 100°C | [ME] | 58 | 57 | 63 | 63 |
| Dmax-Dmin | [dNm] | 16,5 | 16,0 | 10,6 | 10,7 |
| t 10% | [min] | 1,8 | 1,1 | 0,5 | 0,5 |
| t 90% | [min] | 26,8 | 25,1 | 26,2 | 27,4 |
| t 80% - t 20% | [min] | 10,2 | 8,2 | 9,9 | 10,4 |
| Vulkanisationszeit | [min] | 50 | 50 | 40 | 50 |
| | | | | | |

| **Vulkanisatergebnisse** | | | | | |
|---|---|---|---|---|---|
| **Merkmal** | **Einheit** | **Bsp.2** | **Bsp.3** | **Bsp.4** | **Bsp.5** |
| Zugfestigkeit | [MPa] | 14,4 | 13,7 | 13,4 | 13,0 |
| Spannungswert 100% | [MPa] | 1,6 | 1,8 | 1,6 | 1,5 |
| Spannungswert 300% | [MPa] | 8,2 | 10,0 | 9,3 | 9,5 |
| Spannungswert 300/100% | [-] | 5,2 | 5,4 | 5,8 | 6,4 |
| Bruchdehnung | [%] | 420 | 360 | 360 | 350 |
| Bruchenergie | [J] | 81,3 | 64,6 | 58,0 | 52,7 |
| Shore-A-Härte | [SH] | 63 | 63 | 55 | 55 |
| Ball-Rebound (23°C) | [%] | 32,9 | 34,1 | 38,3 | 36,5 |
| DIN-Abrieb | [mm³] | 89 | 75 | 58 | 65 |
| Dyn. Dehnmodul E*(0°C) | [MPa] | 19,9 | 20,5 | 12,7 | 14,8 |
| Dyn. Dehnmodul E* (60°C) | [MPa] | 8,3 | 8,8 | 6,2 | 7,1 |
| Verlustfaktor tan δ (0°C) | [-] | 0,505 | 0,482 | 0,454 | 0,473 |
| Verlustfaktor tan δ (60°C) | [-] | 0,114 | 0,104 | 0,099 | 0,090 |
| Kontakttemperatur | [°C] | 67 | 68 | 62 | 61 |
| Einstichtemperatur | [°C] | 118 | 118 | 113 | 112 |
| Permanent Set | [%] | 5,0 | 3,8 | 3,3 | 2,8 |
| Dispersion Phillips | [-] | 8 | 9 | 7 | 9 |

Die Mischung aus Beispiel 5 mit der erfindungsgemäßen Organosiliziumverbindung aus Beispiel 1 zeigt gegenüber den Referenzen ein sehr gutes statisches Eigenschaftbild. Insbesondere der Verstärkungsfaktor Spannungswert 300%/Spannungswert 100% liegt im Vergleich zu den Referenzmischungen signifikant höher, was eine hohe Ausbeute an Füllstoff-Kautschuk Bindungen anzeigt. Zudem ist der Verlustfaktor tan δ (60°C), der mit dem Rollwiderstand korreliert, vorteilhaft niedrig. Ferner ist der Wärmeaufbau der Mischung im Goodrich Flexometertest für die Mischung aus Beispiel 5 am geringsten.

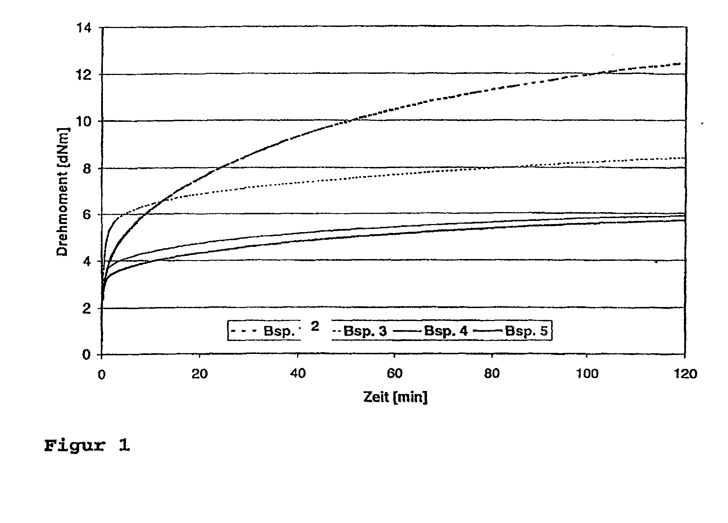

Zudem ist die vorteilhafte, hohe thermische Stabilität des erfindungsgemäßen Silans auffällig. So ist kaum ein Drehmomentsanstieg der unbeschleunigten Mischung bei 165°C festzustellen (Figur 1). Dies zeigt, daß die unbeschleunigte Mischung mit dem erfindungsgemäßen Silan wesentlich unempfindlicher gegenüber einer Anvulkanisation während des Mischprozesses ist, als zum Beispiel Si 69.

## Patentansprüche

1. Organosiliziumverbindung der allgemeinen Formel I
R¹R²R³Si-R⁴-S-Zn-S-R⁴-SiR¹R²R³ (I)
wobei
R¹, R², R³ unabhängig voneinander, H, Halogen,
geradkettige oder verzweigte Alkylgruppe,
geradkettige oder verzweigte Alkoxygruppe,
R⁴ ein geradkettiger oder verzweigter Alkylidenrest bedeuten.

2. Organosiliziumverbindungen nach Anspruch 1,
**dadurch gekennzeichnet,**
**daß** R¹, R², R³ = Ethoxy und R⁴ = CH₂CH₂CH₂ oder Isobutyliden bedeuten.

3. Verfahren zur Herstellung der Organosiliziumverbindungen nach Anspruch 1,
**dadurch gekennzeichnet,**
**daß** man eine Mercaptanverbindung der allgemeinen Formel II
R¹R²R³Si-R⁴-S-H (II),
wobei
R¹, R², R³ unabhängig voneinander, H, Halogen,
geradkettige oder verzweigte Alkylgruppe,
geradkettige oder verzweigte Alkoxygruppe,
R⁴ ein geradkettiger oder verzweigter Alkylidenrest bedeuten,
mit Zinkalkoholat umsetzt.

4. Verfahren zur Herstellung der Organosiliziumverbindungen nach Anspruch 3,
**dadurch gekennzeichnet,**
**daß** man die Umsetzung im Temperaturbereich von 20° bis 200°C durchführt.

5. Verfahren zur Herstellung der Organosiliziumverbindungen nach Anspruch 3,
**dadurch gekennzeichnet,**
**daß** man die Umsetzung in alkoholischer Lösung durchführt.

6. Verfahren zur Herstellung der Organosiliziumverbindungen nach Anspruch 3,
**dadurch gekennzeichnet,**
**daß** man eine Verbindung der Formel II mit R¹, R², R³ = Ethoxy, R⁴ = CH₂CH₂CH₂, mit Zinkethanolat in ethanolischer Lösung umsetzt.

7. Verwendung der Organosiliziumverbindungen nach Anspruch 1 in Kautschukmischungen.

8. Kautschukmischungen,
**dadurch gekennzeichnet,**
**daß** sie Kautschuk, Füllstoff, mindestens eine Organosiliziumverbindung der Formel I und gegebenenfalls weitere Kautschukhilfsmittel enthalten.

9. Kautschukmischungen nach Anspruch 8,
**dadurch gekennzeichnet,**
**daß** die Organosiliziumverbindung der Formel I in einer Menge von 0,1 bis 15 Gew.-%, bezogen auf die Menge des eingesetzten Füllstoffs, eingesetzt wird.

10. Kautschukmischungen nach Anspruch 8,
**dadurch gekennzeichnet,**
**daß** sie Synthesekautschuk und Kieselsäure als Füllstoff enthalten.

11. Verfahren zur Herstellung von Kautschukmischungen nach Anspruch 8,
**dadurch gekennzeichnet,**
**daß** man Kautschuk, Füllstoff, mindestens eine Organosiliziumverbindung der Formel I und gegebenenfalls weitere Kautschukhilfsmittel mischt.

12. Formkörper, hergestellt aus den Kautschukmischungen gemäß Anspruch 8.

13. Formkörper nach Anspruch 12,
**dadurch gekennzeichnet,**
**daß** es Luftreifen, Reifenlaufflächen, Kabelmäntel, Schläuche, Reifen, Schuhsohlen, Dichtungsringe oder Dämpfungselemente sind.

## Claims

1. An organosilicon compound of the general formula I
R¹R²R³Si-R⁴-S-Zn-S-R⁴-SiR¹R²R³ (I)
wherein R¹, R², R³, independently, represent H, a halogen, a straight-chain or branched alkyl group or a straight-chain or branched alkoxy group and R⁴ represents a straight-chain or branched alkylidene group.

2. Organosilicon compounds according to Claim 1,
**characterised in that**
R¹, R², R³ = ethoxy and R⁴ = CH₂CH₂CH₂ or isobutylidene.

3. A process for preparing organosilicon compounds according to Claim 1,
**characterised in that**
a mercaptan compound of the general formula II
R¹R²R³Si-R⁴-S-H (II),
wherein R¹, R², R³, independently, represent H, a halogen, a straight-chain or branched alkyl group or a straight-chain or branched alkoxy group and R⁴ represents a straight-chain or branched alkylidene group,
is reacted with zinc alcoholate.

4. A process for preparing organosilicon compounds according to Claim 3,
**characterised in that**
the reaction is performed in the temperature range 20° to 200°C.

5. A process for preparing organosilicon compounds according to Claim 3,
**characterised in that**
the reaction is performed in alcoholic solution.

6. A process for preparing organosilicon compounds according to Claim 3,
**characterised in that**
a compound of the formula II with R¹, R², R³ = ethoxy, R⁴ = CH₂CH₂CH₂, is reacted with zinc ethanolate in ethanolic solution.

7. Use of the organosilicon compounds according to Claim 1 in rubber mixtures.

8. Rubber mixtures,
**characterised in that**
they contain rubber, filler, at least one organosilicon compound of the formula I and optionally other rubber auxiliary substances.

9. Rubber mixtures according to Claim 8,
**characterised in that**
the organosilicon compound of the formula I is used in an amount of 0.1 to 15 wt.%, with respect to the amount of filler used.

10. Rubber mixtures according to Claim 8,
**characterised in that**
they contain synthetic rubber and silica as filler.

11. A process for preparing rubber mixtures according to Claim 8,
**characterised in that**
rubber, filler, at least one organosilicon compound of the formula I and optionally other rubber auxiliary substances are mixed.

12. Moulded items, prepared from the rubber mixtures in accordance with Claim 8.

13. Moulded items according to Claim 12,
**characterised in that**
they are pneumatic tyres, tyre treads, cable sheathing, hoses, tyres, soles of shoes, sealing rings or damping elements.

## Revendications

1. Composé organosilicique de formule générale I
R¹R²R³Si-R⁴-S-Zn-S-R⁴-Si R¹R²R³ (I)
dans laquelleR¹, R², R³ représentent indépendamment les uns des autres un atome de H, un atome d'halogène, des radicaux alkyle à chaîne linéaire ou ramifiée, des radicaux alcoxy à chaîne linéaire ou ramifiée, R⁴ représente un reste alkylidène à chaîne linéaire ou ramifiée.

2. Composé organosilicique selon la revendication 1, c
**caractérisé en ce que**
R¹, R², R³ = éthoxy et R⁴ = CH₂CH₂ ou isobutylidène.

3. Procédé de préparation du composé organosilicique selon la revendication 1,
**caractérisé en ce que**
l'on fait réagir un composé de mercaptan de formule générale II
R¹R²R³Si-R⁴-S-H (II)
dans laquelle R¹, R², R³ représentent indépendamment les uns des autres un atome de H, un atome d'halogène, des radicaux alkyle à chaîne linéaire ou ramifiée, des radicaux alcoxy à chaîne linéaire ou ramifiée, R⁴ représente un reste alkylidène à chaîne linéaire ou ramifiée, avec un alcoolate de zinc.

4. Procédé de préparation du composé organosilicique selon la revendication 3,
**caractérisé en ce que**
l'on entreprend la réaction dans la plage de température de 20 à 200°C.

5. Procédé de préparation du composé organosilicique selon la revendication 3,
**caractérisé en ce que**
l'on entreprend la réaction en solution alcoolique.

6. Procédé de préparation du composé organosilicique selon la revendication 3,
**caractérisé en ce que**
l'on fait réagir un composé de formule II dans lequel R¹, R², R³ = éthoxy et R⁴ = CH₂CH₂ avec de l'éthanolate de zinc en solution alcoolique.

7. Utilisation des composés organosiliciques selon la revendication 1 dans des mélanges de caoutchoucs.

8. Mélanges de caoutchoucs, **caractérisés en ce qu'**ils contiennent du caoutchouc, une charge, au moins un composé organosilicique de formule I et éventuellement d'autres adjuvants pour caoutchouc.

9. Mélanges de caoutchoucs selon la revendication 8,
**caractérisés en ce que**
le composé organosilicique de formule I est mis en oeuvre en une quantité de 0,1 à 15 % en poids, par rapport à la quantité de la charge mise en oeuvre.

10. Mélanges de caoutchoucs selon la revendication 8,
**caractérisés en ce qu'**
ils contiennent comme charge du caoutchouc de synthèse et de l'acide silicique.

11. Procédé de préparation de mélanges de caoutchoucs selon la revendication 8,
**caractérisés en ce que**
l'on mélange du caoutchouc, une charge, au moins un composé organosilicique de formule I et éventuellement d'autres adjuvants pour caoutchoucs.

12. Corps moulés, préparés à partir des mélanges de caoutchoucs selon la revendication 8.

13. Corps moulés selon la revendication 12,
**caractérisés en ce qu'**
il s'agit de pneumatiques, de surfaces de roulements de pneus, de gaines de câbles, de flexibles, de pneus, de semelles de chaussures, de bagues d'étanchéité ou d'éléments d'amortissement.
